# EUROPEAN PATENT SPECIFICATION

(11) **EP 3 710 225 B1**
(45) Date of publication and mention of the grant of the patent: **28.06.2023**
(21) Application number: 18799788.7
(22) Date of filing: 14.11.2018
(51) Int. Cl.: B29C 64/106, B29C 64/209, B29C 64/386, B29C 64/25

(54) **HUMAN MACHINE INTERFACE (HMI) FOR A BIOPEN**
MENSCH-MASCHINE-SCHNITTSTELLE FÜR EINEN BIOPEN
INTERFACE HOMME-MACHINE (IHM) POUR UN DISPOSITIF D'IMPRESSION

(30) Priority: 15.11.2017 WO PCT/EP2017/079283; 21.11.2017 US 201762589391 P
(43) Date of publication of application: 23.09.2020
(73) Proprietor: SMR Patents Sarl, 2453 Luxembourg (LU)
(72) Inventor: THORPE, Dylan, Lonsdale South Australia 5160 (AU); BELCHER, Simon, Lonsdale South Australia 5160 (AU); HARRY, David, Lonsdale South Australia 5160 (AU); NICHOLSON, James, Lonsdale SA 5160 (AU)
(74) Representative: Weber-Bruls, Dorothée
(86) International application number: PCT/EP2018/081256
(87) International publication number: WO 2019/096859

(56) References cited:
- WO-A1-2012/134469
- US-A1- 2008 154 188
- US-A1- 2016 361 867

## Description

### TECHNICAL FIELD

The following description relates to a Human Machine Interface (HMI) for a handheld 3 dimensional (3D) printing device ("BioPen"), which is used for manufacturing of biocompatible materials.

### BACKGROUND

Laboratory studies and devices have established the technical feasibility of a handheld 3D printer for surgical biofabrication. In one recent (although not necessarily well known) system, UV curable inks containing stem cells and biomaterials are in-situ printed and UV cured to allow a surgeon to biofabricate a tissue structure, for example to directly repair damaged cartilage. In this system, two reagent containers separately store the stem cells and biomaterial as hydrogels and a mechanical extrusion system is used to extrude the reagents through 3D printed titanium extruder nozzle, and a UV light source is used to cross-link the hydrogels immediately after extrusion to form a stable structure that encapsulates and supports the stem cells. A foot pedal is used to control reagent extrusion and the rate of extrusion is controlled using an electronic control interface. Each extruder has a circular cross section and is deposited co-axially with a core material containing the stem cells and a shell material which encapsulates and supports the core material

While technical feasibility has been established with the above discussed example, such devices have a number of disadvantages, particularly in cost effective production and reliable use. For example, the example device discussed above suffers from reliability and consistency issues. The viscosity, and thus the flow rate of the reagents, are sensitive to temperature and the material properties are sensitive to the mixing ratio. This then requirestight control of the extrusion rates. Additionally, this device has limited freedom of movement as it is connected by cables to a foot pedal and an electronic control interface. Further, the nozzle is a 3D printed titanium nozzle which is expensive and unsuitable for volume manufacturing.

In addition, conventional devices are difficult to operate having complicated user interfaces which require multi-step processes. For example, such devices do not allow for versatility in changing functional settings and operations, thus fail to provide ease of use. The power control, activation control, flow rate control, among other functions, are not conveniently positioned for easy access to the user. This causes inconvenience to the operator and user, while potentially impacting the effectiveness of the entire procedure. US2016/361867 A1 also discloses a handheld 3D printer.

Therefore, a handheld 3D printing device has been developed which, in at least an aspect, overcomes the above-mentioned drawbacks of the devices known in the prior art. In order to facilitate the use of such a handheld 3D printing device, a user interface is needed which allows an easy way to adjust the necessary settings, provides a clear and easy to understand presentation of the current settings, allows for an easy way to control and/or change the settings during use of the device and informs the user of future actions needed to be made. Thus, there is a need for an easy and intuitive way to operate such a handheld 3D printing device.

### SUMMARY

The present invention concerns a Human Machine Interface (HMI) (51) and a handheld 3D printing apparatus according to the appended claim 1.

The HMI may be designed as a touch display but may also be designed with push buttons or combinations thereof. With the on/off power button, the handheld 3D printing apparatus, for example a "BioPen", may be turned on and turned off, respectively. The on/off power button may also be used to wake the device in case it has been switched to a sleep mode or stand-by mode if it hasn't been used for a specific period of time. In one embodiment, the on or off mode may be distinguishable by the time the on/off power button is pushed, i.e. a short push of the button turns the device on whereas a push of the button, for example, for 2 seconds turns the device off. This may avoid an accidental turning off of the device during use.

The speed indicator provides information about the velocity with which the respective materials are extruded from the BioPen. Any scale may be used to allow a precise reading of the actual velocity. For example, the scale may be a numerical value from 0 to 100% or a graphical representation of the actual value. The speed indicator directly reacts to a change initiated by using the setting control button described below.

The setting control button is configured to select one or more settings and may be used to select, adjust and/or regulate the operating mode of the BioPen. This means, with the setting control button for example the rate of extrusion may be set. The rate of the first and second reagents may be independently set or all reagents are extruded with the same rate. In case of more than two reagent containers in the BioPen, all reagents may be extruded with a different rate or with the same rate. The setting control button may also be used to set the respective curing mode, such as setting the wavelength or intensity of the light and setting the duration the light source is turned on. The purge of the respective conduits may also be set with the setting control button. The different settings may be achieved by the number of pushes. For example, one push allows adjusting the extrusion rate, two pushes allow adjusting the settings of the light source, three pushes allow starting/stopping of the purging procedure, and the like.

The indicator lamps indicate when the respective part of the BioPen is purged, i.e., for example, when a first conduit leading to a core aperture is purged and/or when a second conduit leading to an annular aperture is purged. In one embodiment, pushing the purge indicator lamps directly starts the purge procedure, i.e. it is not necessary to use the setting control button.

The RMI may further include a curing mode light. This curing mode light is turned on in case the curing light of the light source has been switched on and the curing of the extruded material takes place. In one embodiment the curing mode light may have different colors or may glow with a different intensity depending on the intensity of the curing light or depending on the wavelength of the light emitted by the curing light. The intensity of wavelength of the curing light can be adjusted with the setting control button. In one embodiment, pushing the curing mode light directly turns the light source on or off, i.e. it is not necessary to use the setting control button. The latter may be used then for adjusting the intensity or wavelength of the curing light.

In one embodiment, the HMI further includes a battery indicator lamp. This lamp informs the user about the state of the charge of the battery. In one embodiment, a green light indicates a high charge state and a red light indicates a low charge state. Other colors may be possible, for example to indicate different intermediate charge states. It is also possible that the battery indicator lamp starts to flash in case of a very low charge state, or that the level of fullness of the indicator indicates the charge state.

In addition to the above, the HMI may also include a device for providing acoustic signals. Such acoustic signals may indicate, for example, the charge state of the battery, the loading state of the reagent containers, or may acoustically confirm that a user input has been made. In one embodiment, it is possible to turn the device, for example a speaker, off.

The HMI may further include an extrude button at the operators fingertip. With this extrude button the BioPen is operated based on the settings and adjustments made with the HMI. The extrude button may be directly located on the HMI. In one embodiment, the extrude button may be located at a position other than on the HMI, for example at a position on the side of the BioPen which allows an easy use for the operator.
The BioPen which is operated by using the HMI (and optionally the extrude button) comprises the features according to the appended claim 1.

The BioPen may further include a light source mounted on or in the device and controlled by the electronic control circuit for curing the reagents either just prior to or after extrusion from the tip. The light source may be turned on or off with the setting control button and the curing mode light indicates whether the light source is on or off and indicates the intensity with which the curing light is emitted or indicates the wavelength of the light emitted by the light source. In one embodiment, the light source may be mounted externally on the nozzle to cure the reagents after extrusion from the tip.

The HMI is located at a suitable position of the BioPen, which is at the upper housing of the BioPen. Suitable in this respect means that using the HMI should be easy in order to enter the settings before the initial use of the BioPen. It should also be easy to change the settings during use of the BioPen or to monitor the display during use in order to be able change the settings, if necessary or to change empty reagent containers.

The HMI may be configured to allow a user to control the rate of extrusion of the reagents from the first and second reagent containers, and select between different operating modes, for example between two or more operating modes. For example, the rate of extrusion of the first and second reagents may be independently controllable. In one embodiment, the rate of extrusion of the first and second reagents is a mechanically fixed ratio.

The BioPen may include one or more additional reagent container support arrangements which in use each receives and support an additional reagent container, and wherein the electric drive train arrangement is further configured to drive each additional reagent piston into a distal end of the additional reagent container, and the nozzle is further configured to receive the additional reagent driven out of a proximal end of each additional reagent container and co-extrude each additional reagent with the first and second reagents. Consequently, the HMI may be adapted to allow settings independent of the number of reagent containers. In one embodiment, the HMI automatically displays the necessary controls in direct response of the number of reagent containers inserted into the BioPen.

The use interface drives custom software that controls all device functions.

### BRIEF DESCRIPTION OF DRAWINGS

Embodiments of the present disclosure will be discussed with reference to the accompanying drawings wherein:
Figure 1A is a diagram illustrating a first isometric view of a BioPen with a rear hinge;
Figure 1B is a diagram illustrating a second isometric view of the BioPen shown in Figure 1A
Figure 1C is a diagram illustrating an exploded view of the BioPen shown in Figure 1A;
Figure 1D is a diagram illustrating a top view of the BioPen shown in Figure 1A with the upper housing removed;
Figure 1E is a diagram illustrating a side view of the BioPen shown in Figure 1A;
Figure 1F is a diagram illustrating a bottom view of the BioPen shown in Figure 1A;
Figure 1G is a diagram illustrating a front view of the BioPen shown in Figure 1A;
Figure 1H is a diagram illustrating a sectional view through section SS of Figure 1D;
Figure 1I is a diagram illustrating a side view of the BioPen shown in Figure 1A with the top cover open;
Figure 1J is a diagram illustrating a bottom view of the BioPen shown in Figure 1A with the lower housing removed;
Figure 1K is a diagram illustrating a sectional view through section YY of Figure 1D;
Figure 1L is a diagram illustrating a sectional view through section ZZ of Figure 1D;
Figure 2 is a diagram illustrating a schematic view of the user interface of the BioPen shown in Figure 1A;
Figure 3 is a diagram illustrating a top view of a extrusion button located within the user's graps;
Figure 4A is a diagram illustrating a section of knee cartilage with a damaged section using the BioPen;
Figure 4B is a diagram illustrating the knee cartilage with the damaged section excised;
Figure 4C is a diagram illustrating the BioPen printing a biomaterial into the excised section to repair the knee cartilage.

In the following description, like reference characters designate like or corresponding parts throughout the figures.

### DESCRIPTION OF EMBODIMENTS

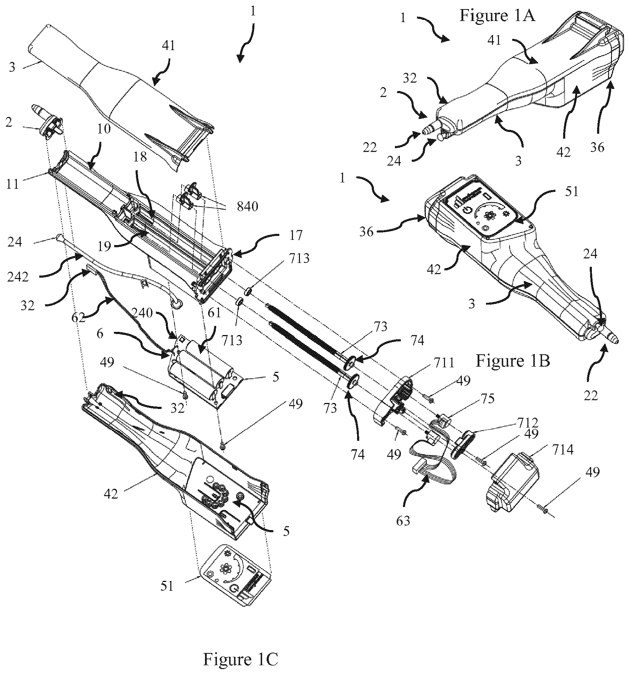

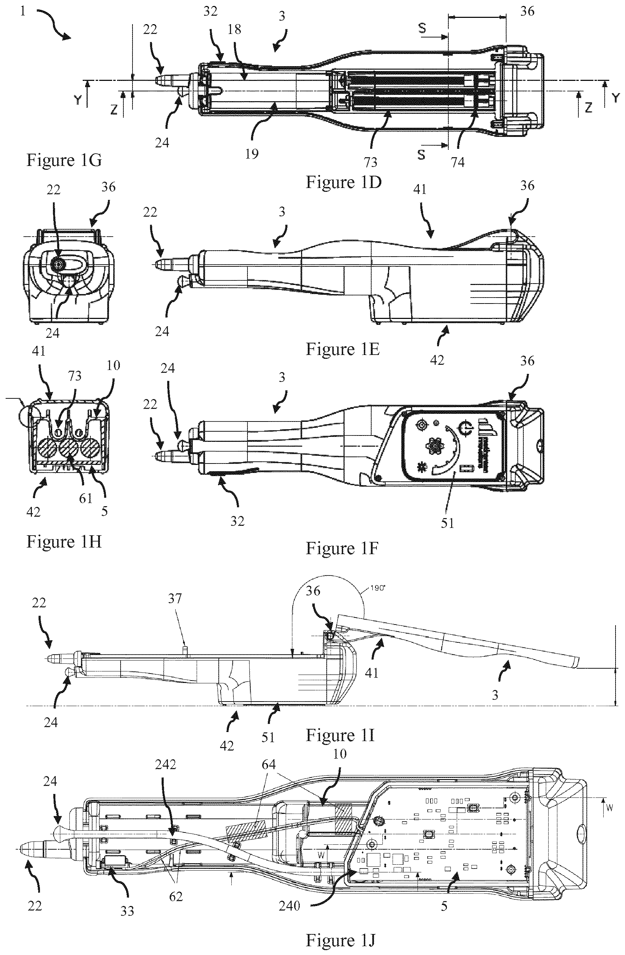

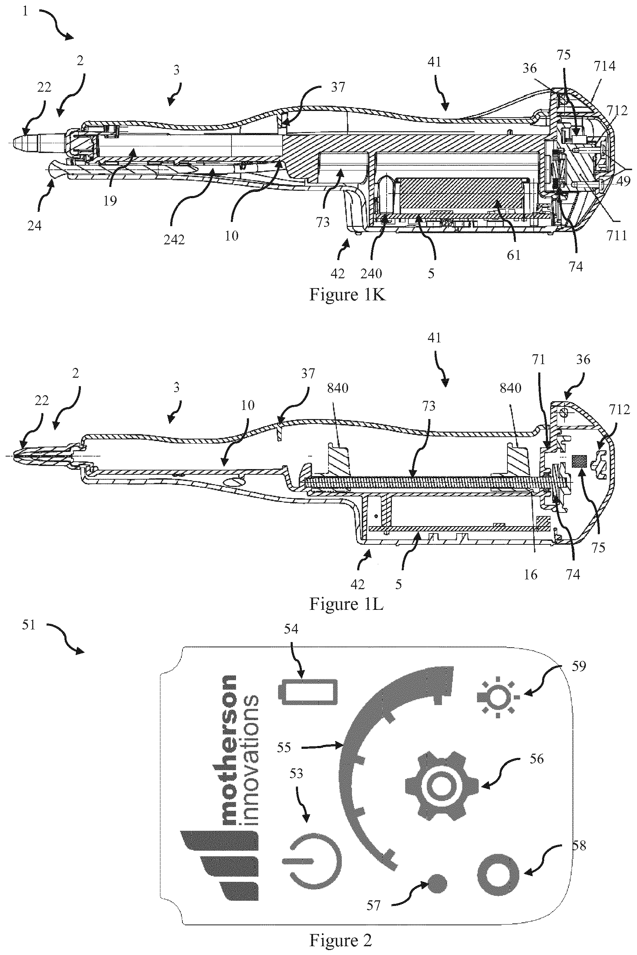

Referring now to Figures 1A to 1L and Figure 2, there is shown an exemplary embodiment of a BioPen apparatus 1 with a rear hinge allowing top loading of reagent containers. Figures 1A and 1B show isometric views, and Figures 1E, 1F and 1G show side bottom and front views of the BioPen apparatus. Figure 1I shows a side view with the top cover open and flipped back. Figure 1D is a top view with the upper housing (top cover) 41 removed, and Figure 1J is a bottom view of the embodiment shown in Figure 12A with the lower housing (lower cover) 42 removed. Figures 1H, 1K and 1L are sectional views through sections SS, YY and ZZ of Figure 1D respectively.

As can be seen in these embodiments, the apparatus 1 includes a frame 10 which supports the nozzle assembly 2, reagent containers (not shown) in cavities 18, 19, drive assembly 7, control module 5 and power supply 6. The housing surrounds the frame and includes an upper housing 41, a lower housing 42, and a rear motor cover 714. In this context relative locations such as upper, lower, forward or proximal, and rear or distal are referenced with respect to the nozzle tip when held by a user. The lower housing 41 has a cradle shape and includes clips on the inside surfaces to allow the housing 10 to be clipped into the lower housing 41. The nozzle assembly 2 projects forward of the proximal (or forward) ends of the upper and lower housings 41 and 42. The upper housing 42 is connected to the rear motor cover 714 using a hinge 36 that allows the upper housing 41 to hinge upwards and rearward as shown in Figure 1J. In this embodiment hinging through an opening angle of up to a point where the upper end of the upper housing 41 is the same level of the lower housing 42 is possible. The opening should be at least 90° in order to allow for an easy replacement of the reagent containers. It is also possible that the upper housing open with an angle of 270° so that in case the user has the BioPen in its hands the upper end of the upper housing points downwards. On one embodiment the upper housing may flip through 90° to 270°. For example, the opening angle may be 90°, 100°, 110°, 120°, 130°, 140°, 150°, 160°, 170°, 180°, 190°, 200°, 210°, 220°, 230°, 240°, 250°, 260° or 270° or any other angle.

A latch 37 is formed on the inside upper surface of the lower housing 42 which engages with the inside of the upper housing to retain the upper housing in a closed position. In other embodiments the hinge is located in a rear portion of the housing to allow the upper housing component 41 to flip through at least 90° to provide internal access to allow loading of reagent containers. In some embodiments non-biocompatible materials and components are separated from the operating environment by mechanically sealed enclosures. In some embodiments the upper housing 41 (or an upper portion of the housing) is transparent to allow viewing of the reagent containers and actuators. In some embodiment the frame 10 and upper housing 41 (or an upper portion of the housing) are embossed with lettering to locate the reagents in the correct position.

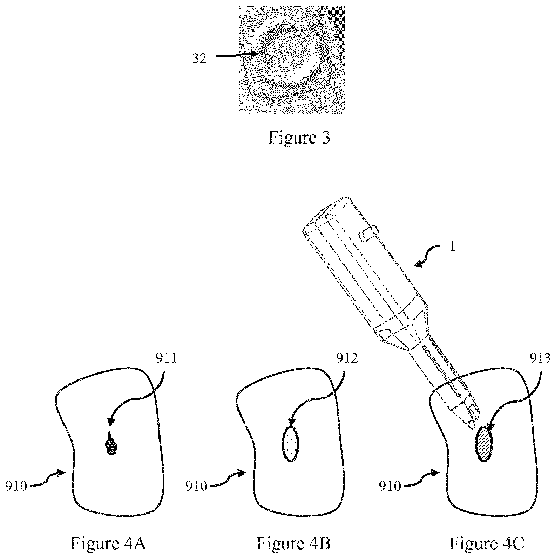

The housing is molded so that the BioPen apparatus 1 can be comfortably held by a user's hand with the upper housing 41 having a bump near the palm and a depression near the fingertip region of the handgrip portion 3. In this embodiment which is not according to the appended claims, the user interface 51, as shown in Figure 2, is located on the lower housing 42 (underside when held) of the BioPen. In one embodiment, an extrusion button 32 (see Figure 3) may be located on the proximal side of the lower housing 42 which engages with the actuator 74 to allow a user to control extrusion of material from the BioPen. This means that extrusion may be started and stopped using the actuator 74. It may also be possible to assign other operation modes to the extrusion button 32, for example turning on and turning off the curing light. Other operation modes are possible and envisaged.

In an example, the drive assembly includes two jack screws (shafts) that pass through apertures in the rear wall 17 of the frame 10 and end in jack spur gears 74 which are held in place by a retainer 712. The retainer 712 may be mounted to the frame 10 and rear motor cover 714 via screws 49. The retainer 712 also supports the stepper motors 79. Plunger actuators 840 are mounted on the jack screws such that rotation of the jack screws moves the plunger actuators 840 forward (or rearward) to drive the plungers of the syringes (located in the forward or handgrip portion) to extrude material.

In this embodiment, the power supply 6 includes three 1.5V AAA type batteries which are located in a battery compartment on the underside of the frame 10, and above the PCB circuit board on which is mounted control electronics including a microprocessor and power circuits to respond to user interface signals and to control the operation of the apparatus 1. Wires 63 run from the PCB on the underside of the frame 10 to the extrusion button 32, and wires 65 run from the PCB to the stepper motors 75 to control extrusion. A UV LED 240 is mounted on the top surface of the PCB, and a light pipe 242 directs the UV light to the tip of the nozzle 2 to provide a UV light source 24 to cure extruded material. Figure 1J is a bottom view with the lower housing 42 removed to show the light pipe path 242 and underside of PCB 5 which includes actuators 52. The actuators 52 are adapted to receive user inputs via the user interface 51 and LEDs for indicating status to the user interface 51.

The exemplary embodiment of the user interface 51 is configured to allow a user to control the rate of extrusion of the reagents from the first and second reagent containers, and select between at least two operating modes (for example manual and automatic). As shown in the embodiment of Figure 2, the user interface 51 includes an on/off power button 53, a battery indicator (e.g. green for high power and red for low power, or a full bar indicating high power and a low bar indicating low power) 54, a speed indicator 55, which may be provided as a series of lamps (or lamp segments) to indicate the current speed of the device, or to allow the user to set the extrusion speed. A setting control button 56 allows a user to select an operating mode, for example, one of a predefined set of operating modes. The user interface may further include a second indicator lamp 57 and a first indicator lamp 58, and a curing mode light 59 (for example when the UV lamp is on and/or post illumination as the extruded material cures). An audible beep (for example 65 dBA) may be used to confirm user input and signal faults. Indicator LEDs are mounted on the PCB and may directly illuminate associated indicators on the user interface 51, or may use light pipes to direct light to the user interface 51.

In one embodiment, the "on" state is indicated by the presence of at least one illuminated light. That is, where any of the indicator lights are illuminated, a user may identify that the device is powered on. The BioPen apparatus 1 can be configured so that the illuminated light cycles clockwise or counter clockwise and cycles back to the starting position once the end is reached. The default configuration is to cycle clockwise starting in the purge shell position. By default:
The curing lamp is not illuminated during purging;
The curing lamp is on low power during extrusion to facilitate a pre-cure, configurable to any pattern and/ or percentage of full power (set at the factory);
The light is applied at any configurable percentage or pattern (set at the factory) in light only mode. No other functions are active; and
The curing light is illuminated in time limited periods to facilitate control over light dose/ curing of materials.

The BioPen as described in the embodiments above may be further modified to include additional reagent containers and to co-extrude these additional reagents. In these embodiments, the previously described reagent support arrangements and the electric drive train arrangement may be further configured to drive each additional reagent piston into a distal end of the additional reagent container, and the nozzle may be further configured to receive the additional reagent driven out of a proximal end of each additional reagent container and co-extrude each additional reagent with the first and second reagents. In such embodiments, the BioPen may include at the distal end of each reagent container a flange with a unique profile shape, and each reagent container support arrangement may include a cut-out portion matching the unique profile shape.

In other embodiments, the present system could be extended to add additional syringe assemblies to extrude N-axial beads of material. i.e. using 4, 5, 6, 7 or even more syringes. Generally, N materials and N associated syringes and drive assemblies may be used, wherein N is an integer, for example from 1 to 10. In other embodiments, other geometrical layouts could be used such as distributing the syringe and driver arrangements around a central axis (e.g. at 0°, 120° and 240°) and redesigning the manifolds (or fluid delivery channels) in the nozzle 120.

Thus, in at least one aspect, the invention may generally be used for extruding radiation curable reagent compositions. The radiation curable reagent composition may additionally be cured by using the handheld 3D printing apparatus, for example using a light source which is part of the BioPen. In one embodiment, the light source may be an external light source.

Examples of the handheld 3D printing apparatus or BioPen have a number of surgical and research uses. For example the BioPen can be used for repairing defects of a mammalian body. Such defects may be, but are not limit to, tissue defects or bone defects. In one embodiment, the repair relates to biological materials which are unable to self-repair such as cartilage or corneal tissue. In such applications, the BioPen can be used to directly write 3D living cells onto the damaged area for tissue or bone regeneration. For example, cartilage is unable to self-repair and can become damaged through physical activities, wear, trauma or degenerative conditions. A BioPen loaded with appropriate stem cells can be used to perform in-situ repair, and current surgical interventions are of limited effectiveness. It is also possible to use the BioPen for cell types capable of repair, such as skin or bones. In such cases the BioPen could be used to directly print or write living cells onto damaged tissue to assist with the repair process. For example, bone stem cells and bone growth factors could be printed on fractures or in other bone surgery such as spinal fusions to stimulate bone growth. Similarly, keratinocytes and other skin cells could be directly printed onto cuts, abrasions or burns to stimulate skin repair and minimize scar tissue formation.

Figures 4A to 4C illustrate an exemplary repair process using the BioPen loaded with stem cells which have been cultured to differentiate down a chondrocyte lineage. For example, adipose stem cells when cultured with appropriate growth factors can be directed to differentiate into chondrocytes. Figure 4A shows a section of knee cartilage 910 with a damaged section 911. The surgeon can optionally excise a section 912 to remove the damaged tissue as shown in Figure 4B, and then as shown in Figure 4C the BioPen can be used to directly print a biomaterial 913 into the excised section 912. In this case, the surgeon draws a series of adj acent lines across the excised section 912 until the section 912 is completely filled in creating an in-situ repair.

The handheld 3D printing apparatus or BioPen have a number of advantages. First the BioPen is suitable for cost effective production using high volume manufacturing techniques and processes. For example the nozzle, handgrip and housings can be cheaply manufactured using high throughput techniques such as injection moulding using thermoplastic and/or thermosetting polymers. In particular, the nozzle has been carefully designed to ensure consistent flow of materials whilst also being suitable for cheap and easy construction. The apparatus is an all-in-one unit, featuring an internal power supply, and is ergonomically designed to fit easily in the hand giving the user greater freedom of movement and ease of use. The apparatus is designed to allow easy and fool-proof reagent loading through the use of a hinged opening with different shaped loading bays to ensure that each reagent is loaded (and can only be loaded) into the correct bay. The BioPen can be cost effectively manufactured as a single purpose disposable item which delivers a specific reagent at a constant rate without requiring any control by the user (other than on/off control). More sophisticated control system can be incorporated for the BioPen allowing the user greater control over the extrusion of the reagents.

The RMI allows for an easy use of the BioPen both in setting the necessary parameters and in adjusting the settings during use. The RMI can be operated intuitively. All controls and settings can be monitored at the same time without the necessity of switching to different display modes.

Throughout the specification and the claims that follow, unless the context requires otherwise, the words "comprise" and "include" and variations such as "comprising" and "including" will be understood to imply the inclusion of a stated integer or group of integers, but not the exclusion of any other integer or group of integers.

It will be appreciated by those skilled in the art that the disclosure is not restricted in its use to the particular application or applications described. Neither is the present disclosure restricted in its preferred embodiment with regard to the particular elements and/or features described or depicted herein. It will be appreciated that the disclosure is not limited to the embodiment or embodiments disclosed, but is capable of numerous rearrangements, modifications and substitutions without departing from the scope as set forth and defined by the following claims.

### Reference Sign Listing

- 1: Biopen
- 2: nozzle assembly
- 3: handgrip
- 5: control module
- 6: power supply
- 10: frame
- 11: nozzle support
- 16: end stop
- 17: motor plate receiving surface
- 18: cavity for core reagent container
- 19: cavity for shell reagent container
- 22: tip
- 24: UV light source
- 32: start button (cover)
- 36: hinge
- 37: latch for cover
- 41: rear housing - upper section
- 42: rear housing - lower section
- 49: screw
- 51: user interface
- 52: actuators
- 53: power button
- 54: battery indicator
- 55: speed indicator
- 56: setting control
- 57: purge core indicator (first indicator lamp)
- 58: purge shell indicator (second indicator lamp)
- 59: UV lamp on - curing mode
- 61: batteries 62,63 wiring
- 64: tape
- 73: jack screw
- 74: plunger actuator
- 75: stepper motor
- 240: UV LED
- 242: light pipe
- 711: anti rotation motor mount 712 retaining plate
- 713: drive shaft seals 714 motor cover
- 840: plunger actuator
- 910: knee cartilage
- 911: damaged section
- 912: excised portion
- 913: printed biomaterial

## Claims

1. A Human Machine Interface (HMI) (51) and a handheld 3D printing apparatus (1), the Human Machine Interface comprising:
• an on/off power button (53) configured to power on or power off the handheld 3D printing apparatus (1);
• a speed indicator (55) configured to indicate a speed of extrusion of material from the handheld 3D printing apparatus (1);
• a setting control button (56) configured to select one or more settings of the handheld 3D printing apparatus (1);
• a first indicator lamp (57) configured to indicate a purge operation of a first reagent; and
• a second indicator lamp (58) configured to indicate a purge operation of a second reagent;
wherein the HMI (51) is located at the upper housing of the handheld 3D printing apparatus (1); wherein the HMI (51) drives custom software that controls all apparatus functions; and wherein the handheld 3D printing apparatus (1) comprises:
a housing comprising:
a first reagent container support arrangement which in use receives and supports a first reagent container containing a cell supporting reagent;
a second reagent container support arrangement which in use receives and supports a second reagent container containing a light curable reagent;
a power supply (6);
an electric drive train arrangement configured to drive a first reagent piston into a distal end of the first reagent container, and to drive a second reagent piston into a distal end of the second reagent container;
an electronic control circuit (5) to control the electric drive train to control extrusion of the reagents from the first and second reagent containers; and
a nozzle (2) connected at a distal end (3) to the housing and comprising a coextrusion tip (22) comprising a core aperture and an annular aperture in a coaxial arrangement, and a first conduit for receiving the first reagent driven out of a proximal end of the first reagent container and directing the first reagent out of the core aperture in the tip (22), and a second conduit for receiving the second reagent driven out of a proximal end of the second reagent container and directing the second reagent out of the annular aperture in the tip.

2. The Human Machine Interface (51) of claim 1, further comprising a curing mode light (59) configured to indicate a curing mode.

3. The Human Machine Interface (51) of claim 1, further comprising a battery indicator lamp (54) configured to indicate a charge state of the handheld 3D printing apparatus (1).

4. The Human Machine Interface (51) of claim 1, further comprising a device for providing acoustic signals.

5. The Human Machine Interface (51) of claim 1, further comprising an extrude button at the operators fingertip.

6. The Human Machine Interface (51) of claim 1, wherein the handheld 3D printing apparatus (1) further comprises a light source (24) mounted on or in the device and controlled by the electronic control circuit (5) for curing the reagents either prior to or after extrusion from the tip (22).

7. The Human Machine Interface (51) of claim 1, wherein the Human Machine Interface (51) is configured to allow a user to control the rate of extrusion of the reagents from the first and second reagent containers, and select between at least two operating modes.

8. The Human Machine Interface (51) of claim 1, wherein a rate of extrusion of the first and second reagents is independently controllable.

9. The Human Machine Interface (51) of claim 1, wherein a rate of extrusion of the first and second reagents is a mechanically fixed ratio.

10. The Human Machine Interface (51) of claim 1, wherein the handheld 3D printing apparatus further comprises one or more additional reagent container support arrangements which in use each receives and support an additional reagent container, and wherein the electric drive train arrangement is further configured to drive each additional reagent piston into a distal end of the additional reagent container, and the nozzle (2) is further configured to receive the additional reagent driven out of a proximal end of each additional reagent container and co-extrude each additional reagent with the first and second reagents.

## Patentansprüche

1. Mensch-Maschine-Schnittstelle (*Human Machine Interface* - HMI) (51) und handgehaltenes 3D-Druckgerät (1), wobei die Mensch-Maschine-Schnittstelle Folgendes umfasst:
• eine Ein-/Ausschalttaste (53), die dazu konfiguriert ist, das handgehaltene 3D-Druckgerät (1) ein- oder auszuschalten;
• eine Geschwindigkeitsanzeige (55), die dazu konfiguriert ist, eine Materialextrusionsgeschwindigkeit des handgehaltenen 3D-Druckgeräts (1) anzuzeigen;
• eine Einstellungssteuerungstaste (56), die dazu konfiguriert ist, eine oder mehrere Einstellungen des handgehaltenen 3D-Druckgeräts (1) auszuwählen;
• eine erste Anzeigelampe (57), die dazu konfiguriert ist, einen Spülvorgang eines ersten Reagens anzuzeigen; und
• eine zweite Anzeigelampe (58), die dazu konfiguriert ist, einen Spülvorgang eines zweiten Reagens anzuzeigen;
wobei sich die HMI (51) am oberen Gehäuse des handgehaltenen 3D-Druckgeräts (1) befindet; wobei die HMI (51) eine kundenspezifische Software ausführt, die alle Gerätefunktionen steuert; und wobei das handgehaltene 3D-Druckgerät (1) Folgendes umfasst:
ein Gehäuse, umfassend:
eine erste Reagensbehälterträgeranordnung, die im Gebrauch einen ersten Reagensbehälter, der ein zelltragendes Reagens enthält, aufnimmt und trägt;
eine zweite Reagensbehälterträgeranordnung, die im Gebrauch einen zweiten Reagensbehälter, der ein lichthärtbares Reagens enthält, aufnimmt und trägt;
eine Stromversorgung (6);
eine elektrische Antriebsstranganordnung, die dazu konfiguriert ist, einen ersten Reagenskolben in ein distales Ende des ersten Reagensbehälters zu treiben und einen zweiten Reagenskolben in ein distales Ende des zweiten Reagensbehälters zu treiben,
eine elektronische Steuerungsschaltung (5) zum Steuern des elektrischen Antriebsstrangs, um die Extrusion der Reagenzien aus dem ersten und dem zweiten Reagensbehälter zu steuern; und
eine Düse (2), die an einem distalen Ende (3) mit dem Gehäuse verbunden ist, umfassend eine Koextrusionsspitze (22), die eine Kernöffnung und eine ringförmige Öffnung in einer koaxialen Anordnung umfasst, sowie eine erste Leitung zur Aufnahme des aus einem proximalen Ende des ersten Reagensbehälters herausgetriebenen ersten Reagens und zum Herausleiten des ersten Reagens aus der Kernöffnung in der Spitze (22) und eine zweite Leitung zur Aufnahme des aus einem proximalen Ende des zweiten Reagensbehälters herausgetriebenen zweiten Reagens und zum Herausleiten des zweiten Reagens aus der ringförmigen Öffnung in der Spitze.

2. Mensch-Maschine-Schnittstelle (51) nach Anspruch 1, ferner umfassend eine Aushärtungsmodusleuchte (59), die dazu konfiguriert ist, einen Aushärtungsmodus anzuzeigen.

3. Mensch-Maschine-Schnittstelle (51) nach Anspruch 1, ferner umfassend eine Batterieanzeigelampe (54), die dazu konfiguriert ist, einen Ladezustand eines handgehaltenen 3D-Druckgeräts (1) anzuzeigen.

4. Mensch-Maschine-Schnittstelle (51) nach Anspruch 1, ferner umfassend eine Vorrichtung zum Bereitstellen von akustischen Signalen.

5. Mensch-Maschine-Schnittstelle (51) nach Anspruch 1, ferner umfassend eine Extrudiertaste an der Fingerspitze der Bedienperson.

6. Mensch-Maschine-Schnittstelle (51) nach Anspruch 1, wobei das handgehaltene 3D-Druckgerät (1) ferner eine Lichtquelle (24) umfasst, die an oder in der Vorrichtung montiert ist und durch die elektronische Steuerungsschaltung (5) gesteuert wird, um die Reagenzien entweder vor oder nach der Extrusion aus der Spitze (22) zu härten.

7. Mensch-Maschine-Schnittstelle (51) nach Anspruch 1, wobei die Mensch-Maschine-Schnittstelle (51) dazu konfiguriert ist, es einer Bedienperson zu ermöglichen, die Extrusionsrate der Reagenzien aus dem ersten und dem zweiten Reagensbehälter zu steuern und zwischen mindestens zwei Betriebsmodi auszuwählen.

8. Mensch-Maschine-Schnittstelle (51) nach Anspruch 1, wobei die Extrusionsraten des ersten und des zweiten Reagens unabhängig voneinander steuerbar sind.

9. Mensch-Maschine-Schnittstelle (51) nach Anspruch 1, wobei die Extrusionsraten des ersten und des zweiten Reagens einem mechanisch festgelegten Verhältnis entsprechen.

10. Mensch-Maschine-Schnittstelle (51) nach Anspruch 1, wobei das handgehaltene 3D-Druckgerät ferner eine oder mehrere zusätzliche Reagensbehälterträgeranordnungen umfasst, die im Gebrauch einen zusätzlichen Reagensbehälter aufnehmen und tragen, und wobei die elektrische Antriebsstranganordnung ferner dazu konfiguriert ist, jeden zusätzlichen Reagenskolben in ein distales Ende des zusätzlichen Reagensbehälters zu treiben, und wobei die Düse (2) ferner dazu konfiguriert ist, das aus einem proximalen Ende jedes zusätzlichen Reagensbehälters herausgetriebene zusätzliche Reagens aufzunehmen und jedes zusätzliche Reagens mit dem ersten und dem zweiten Reagens zu koextrudieren.

## Revendications

1. Interface homme-machine (*Human Machine Interface* - HMI) (51) et dispositif d'impression 3D portable (1), l'interface homme-machine comprenant :
• un bouton marche/arrêt (53) configuré pour allumer ou éteindre le dispositif d'impression 3D portable (1) ;
• un indicateur de vitesse (55) configuré pour indiquer une vitesse d'extrusion de matériau à partir du dispositif d'impression 3D portable (1) ;
• un bouton de commande de réglage (56) configuré pour sélectionner un ou plusieurs réglages du dispositif d'impression 3D portable (1) ;
• un premier indicateur lumineux (57) configuré pour indiquer une opération de purge d'un premier réactif ; et
• un second indicateur lumineux (58) configuré pour indiquer une opération de purge d'un second réactif ;
dans laquelle la HMI (51) est située au niveau du boîtier supérieur du dispositif d'impression 3D portable (1) ; dans laquelle la HMI (51) pilote un logiciel personnalisé qui commande toutes les fonctions du dispositif ; et dans laquelle le dispositif d'impression 3D portable (1) comprend :
un boîtier comprenant :
un premier agencement de support de contenant de réactif qui, en utilisation, reçoit et supporte un premier contenant de réactif contenant un réactif de support de cellule ;
un second agencement de support de contenant de réactif qui, en utilisation, reçoit et supporte un second contenant de réactif contenant un réactif pouvant durcir à la lumière ;
une alimentation électrique (6) ;
un agencement d'entraînement électrique configuré pour entraîner un premier piston de réactif dans une extrémité distale du premier contenant de réactif, et pour entraîner un piston de second réactif dans une extrémité distale du second contenant de réactif ;
un circuit de commande électronique (5) pour commander l'entraînement électrique afin de commander l'extrusion des réactifs à partir des premier et second contenants de réactifs ; et
une buse (2) reliée au niveau d'une extrémité distale (3) au boîtier et comprenant une pointe de coextrusion (22) comprenant une ouverture centrale et une ouverture annulaire dans un agencement coaxial, et un premier conduit pour recevoir le premier réactif entraîné en dehors d'une extrémité proximale du premier contenant de réactif et dirigeant le premier réactif en dehors de l'ouverture centrale dans la pointe (22), et un second conduit pour recevoir le second réactif entraîné en dehors d'une extrémité proximale du second contenant de réactif et dirigeant le second réactif en dehors de l'ouverture annulaire dans la pointe.

2. Interface homme-machine (51) selon la revendication 1, comprenant en outre un témoin de mode de durcissement (59) configuré pour indiquer un mode de durcissement.

3. Interface homme-machine (51) selon la revendication 1, comprenant en outre un indicateur lumineux de batterie (54) configuré pour indiquer un état de charge du dispositif d'impression 3D portable (1).

4. Interface homme-machine (51) selon la revendication 1, comprenant en outre un moyen pour fournir des signaux sonores.

5. Interface homme-machine (51) selon la revendication 1, comprenant en outre un bouton d'extrusion au niveau du bout de doigt de l'opérateur.

6. Interface homme-machine (51) selon la revendication 1, dans laquelle le dispositif d'impression 3D portable (1) comprend en outre une source de lumière (24) montée sur ou dans le moyen et commandée par le circuit de commande électronique (5) pour durcir les réactifs soit avant soit après l'extrusion à partir de la pointe (22).

7. Interface homme-machine (51) selon la revendication 1, dans laquelle l'interface homme-machine (51) est configurée pour permettre à un utilisateur de commander la vitesse d'extrusion des réactifs à partir des premier et second contenants de réactifs, et sélectionner entre au moins deux modes de fonctionnement.

8. Interface homme-machine (51) selon la revendication 1, dans laquelle une vitesse d'extrusion des premier et second réactifs peut être commandée de manière indépendante.

9. Interface homme-machine (51) selon la revendication 1, dans laquelle une vitesse d'extrusion des premier et second réactifs est un rapport fixé de manière mécanique.

10. Interface homme-machine (51) selon la revendication 1, dans laquelle le dispositif d'impression 3D portable comprend en outre un ou plusieurs agencements de support de contenant de réactif supplémentaires qui, en utilisation, reçoivent et supportent chacun un contenant de réactif supplémentaire,
et dans laquelle l'agencement d'entraînement électrique est en outre configuré pour entraîner chaque piston de réactif supplémentaire dans une extrémité distale du contenant de réactif supplémentaire, et la buse (2) est en outre configurée pour recevoir le réactif supplémentaire entraîné en dehors d'une extrémité proximale de chaque contenant de réactif supplémentaire et coextrude chaque réactif supplémentaire avec les premier et second réactifs.
